(19) **Europäisches Patentamt**

**European Patent Office**

**Office européen des brevets**

(11) **EP 0 589 204 B1**

(12) **EUROPEAN PATENT SPECIFICATION**

(45) Date of publication and mention
of the grant of the patent:
**16.10.1996 Bulletin 1996/42**

(51) Int Cl.6: **H02M 3/10**, G05F 1/613,
H02M 3/08, G05F 1/614,
G05F 3/16

(21) Application number: **93113184.1**

(22) Date of filing: **18.08.1993**

(54) **Improvement in a stabilized-voltage power supply circuit for boost converters**

Verbesserung einer spannungsstabilisierten Stromversorgungsschaltung für einen Verstärkerwandler

Perfectionnement d'un circuit d'alimentation en courant stabilisé en tension pour un convertisseur d'amplification

(84) Designated Contracting States:
**DE FR GB IT SE**

(30) Priority: **23.09.1992 IT PN920069**

(43) Date of publication of application:
**30.03.1994 Bulletin 1994/13**

(73) Proprietor: **ZELTRON S.p.A.**
**I-33030 Campoformido, Udine (IT)**

(72) Inventor: **Muzzolini, Dario**
**I-33010 Magnano in Riviera, Udine (IT)**

(74) Representative: **Giugni, Valter et al**
**PROPRIA**
**Protezione Proprietà Industriale S.r.L.**
**Via Mazzini 13**
**33170 Pordenone (IT)**

(56) References cited:
**EP-A- 0 357 411**    **DE-A- 3 335 398**

## Description

This invention relates to the use of boost converters in order to generate a stabilized voltage adapted to supply low-power circuits, such as for instance the control circuit of boost converters.

These converters enable a direct voltage $V_{out}$ to be obtained from a direct voltage $V_{in}$, said direct voltage $V_{in}$ being variable within definite limits and said direct voltage $V_{out}$ being stabilized and having a value which is greater than or equal to the highest value of $V_{in}$.

Said converters are supplied by special regulators, or control circuits, which require to be supplied with stabilized voltage.

Further on in this description of the invention reference will be made to the utilization of the stabilized voltage obtained in the boost converter to ensure power supply to the voltage regulator associated with the boost converter itself, but it will be appreciated that such a stabilized voltage may be used to supply any other circuit requiring a low-power stabilized voltage to any purpose whatsoever.

Circuits and devices are known to be available on the market, which are capable of fully complying with the requirement of supplying a stabilized voltage. However, said regulators are quite expensive and also use a relatively considerable amount of energy which in turn require the use of adequately sized and, therefore, more expensive components.

It would therefore be desirable, and it is actually a main purpose of the present invention, to provide a power-supply apparatus, in particular for low-power applications, which is particularly adapted to ensure power supply, in a stabilized way, to the regulator of medium-power power supply circuits and which enables overall costs to be reduced thanks to its easy, simple construction and the use of normally available components and techniques.

Such an aim is reached with a circuit arrangement that is capable of making use of a peculiarity of the voltage across the inductor in a boost converter.

Such a circuit arrangement enables the voltage to be derived from an inductor-transformer, the secondary winding of which generates such a voltage that the sum of the positive rectified half-wave and the negative rectified half-wave is a direct voltage that is constant and stabilized (similarly to $V_{out}$) regardless of the changes in the voltage $V_{in}$.

The invention as described in claim 1 will be further described by way of nonlimiting example with reference to the accompanying drawings in which:

- Figure 1 is a view showing the basic circuit schematics of a stabilized-voltage power supply circuit according to the present invention;

- Figure 2 is a view showing the pattern of the input voltage $V_{in}$ as compared to the stabilized voltage $V_{out}$ and the voltage that is present at the primary winding, with reference to both conditions of the power switch, ie. closed (time $t_1$) and open (time $t_2$);

- Figure 3 is a view showing the corresponding voltage at the secondary winding.

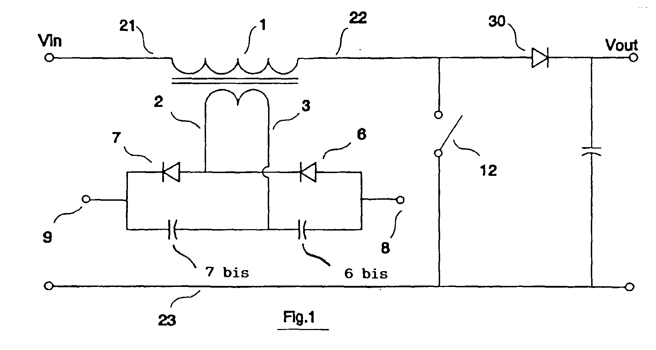

Referring now to Figure 1, it can be noticed that the solution being the object of the present invention essentially consists in making use in an adequate manner of the voltage being generated at the secondary winding of the "inductor-transformer" 1.

The primary winding of said voltage transformer has a terminal 21 to which the variable voltage $V_{in}$ is applied, whereas the other terminal 22 is connected to grounding 23 through a power switch 12 or, when said power switch 12 is open, to the output voltage $V_{out}$ through the diode 30.

The terminals 2 and 3 of the secondary winding are connected to the diodes 6 and 7 and the capacitors 6bis and 7bis in a configuration that is known as peak-to-peak rectifier.

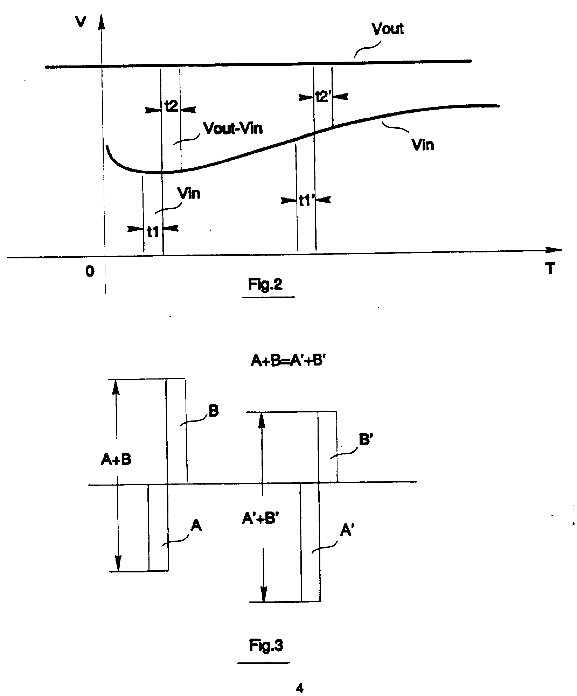

It has been shown that the voltage available between the points 8 and 9 remains constant, in the same way as $V_{out}$, regardless of the changes of the voltage present at the terminal 21 with respect to 23. In this connection, a closer look should be taken, in Figure 2, at the pattern of the voltage 10 at the primary winding of the inductor transformer 1:

- in correspondence of the time $T_1$, when the power switch 12 is closed, the voltage $V_{in}$ is applied to the primary winding of said inductor-transformer 1; in this case, the secondary winding of the transformer charges, through the diode 6, the capacitor 6bis to the voltage A;

- in correspondence of the time $T_2$, when the power switch 12 is open, the voltage being present at the primary winding is inverted and is equal to the difference between $V_{out}$ and $V_{in}$; in such a case, the secondary winding of said inductor-transformer 1 charges the capacitor 7bis, through the diode 7, to the voltage B.

Considering that the sum of the voltages at the primary winding in correspondence of the time $T_1$ and the time is equal to $V_{out}$, and that $V_{out}$ is constant and stabilized since it is generated in this way by the boost power supply, it can be inferred that also the sum of the voltages at the secondary winding, as carried out by the peak-to-peak rectifier, has similar characteristics, ie. is constant and stabilized.

For a clearer understanding, this is stated more precisely as follows:

- in correspondence of the time $t_1$, the voltage applied to the primary winding is $V_{in}$, while

- in correspondence of the time $T_2$, the voltage generated at the primary winding is $V_{out}$ minus $V_{in}$; a sum will therefore give following result:

$$V_{in} + V_{out} - V_{in} = V_{out}$$

and so on, so that, as $V_{in}$ changes, a sequence of voltage pairs, ie. voltage A and voltage B, is obtained, which are variable in their amplitude, but are such that, if said voltages are summed to each other, for each voltage pair a sequence of voltages with a constant value is obtained.

The capacitors 6bis and 7bis are selected with an adequate rating so that they will be able to filter out the ripple caused by the commutations performed by the power switch 12, said ripple having anyway a period of just a few microseconds.

A fully stabilized voltage is therefore obtained in this way through the use of a simple, easy-to-build circuit, as well as the use of two diodes and two capacitors of a general-purpose type with quite normal characteristics.

A further advantage of the present invention is at this point fully apparent: as a matter of fact, the possibility of using only low-capacity capacitors and diodes for low-voltage operation has no practical effect in terms of a possible increase in the overall power input rating. As a consequence, as compared with a traditional voltage stabilizer which on the contrary involves the usage of a certain amount of power, smaller components, which therefore cost less and take up lesser space, can be used in this case .

**Claims**

1. Boost converter comprising a generator of auxiliary, stabilized voltage, said generator being characterized in that it includes an inductance-transformer provided with a primary circuit (1) connected through the input terminal (21) to a D.C. Power Supply and a secondary circuit in which each one of two terminals (2, 3) diverges into two separate conductors, wherein the two conductors relating to one terminal (2) are connected to two output rectifiers (6, 7), respectively, and the two conductors relating to the other terminal (3) are connected to two output filter capacitors (6bis, 7bis), respectively, wherein one of said output rectifiers (6) is oriented toward the wire (2) and the other rectifier (7) is oriented in the opposite direction with respect to said wire (2), the other two terminals of said rectifiers (6, 7) leading to two terminals (8, 9), respectively, and wherein the other two terminals of said output filter capacitors (6bis, 7bis) are connected to said terminals (8, 9), respectively.

2. Boost converter according to claim 1, **characterized in that** the output terminal (22) of said inductance-transformer is connected to a power switch (12) that alternately connects and disconnects said terminal to and from the ground (23).

**Patentansprüche**

1. Verstärkerwandler mit einem Generator für hilfsweise stabilisierte Spannung, wobei der Generator **dadurch gekennzeichnet** ist, daß er einen Induktanz-Transformator umfaßt mit einem Primärschaltkreis (1), der durch einen Eingangsanschluß (21) mit einer Gleichstromversorgung verbunden ist, und einen Sekundärschaltkreis, in welchem jeder von zwei Anschlüssen (2, 3) in zwei separate Leiter divergiert, worin die zwei Leiter bezüglich eines Anschlusses (2) verbunden sind mit jeweils zwei Ausgangsgleichrichtern (6, 7), und die zwei Leiter bezüglich des anderen Anschlusses (3) jeweils verbunden sind mit zwei Ausgangsfilterkondensatoren (6bis, 7bis), worin einer der zwei Ausgangsgleichrichter (6) orientiert ist gegen den Draht (2) und der andere Gleichrichter (7) orientiert ist in entgegengesetzter Richtung in Bezug auf den Draht (2), und die zwei anderen Anschlüsse des Gleichrichters (6, 7) zu zwei Anschlüssen (8, 9) jeweils führen, und worin die zwei anderen Anschlüsse der Ausgangsfilterkondensatoren (6bis, 7bis) jeweils verbunden sind mit den zwei Anschlüssen (8, 9).

2. Verstärkerwandler nach Anspruch 1, **dadurch gekennzeichnet**, daß der Ausgangsanschluß (22) des Induktanz-Transformators mit einem Stromschalter (12) verbunden ist, der alternativ den Anschluß mit und von der Erdung (23) verbindet bzw. trennt.

**Revendications**

1. Convertisseur d'amplification comprenant un générateur de tension stabilisée auxiliaire, ledit générateur étant caractérisé en ce qu'il comprend un transformateur à inductances pourvu d'un circuit primaire (1) connecté par la borne d'entrée (21) à un bloc d'alimentation en courant continu et d'un circuit secondaire dans lequel chacune des deux bornes (2, 3) divergent en deux conducteurs séparés, dans lequel les deux conducteurs en relation avec une borne (2) sont respectivement connectés à deux redresseurs de sortie (6, 7), et les deux conducteurs en relation avec l'autre borne (3) sont connectés respectivement à deux condensateurs filtres (6bis, 7bis) de sortie, dans lequel un desdits redresseurs de sortie (6) est orienté vers le fil conducteur (2) et l'autre redresseur (7) est orienté dans la direction opposée par rapport audit fil conducteur (2), les autres deux bornes desdits redresseurs (6, 7) conduisant respectivement aux deux bornes (8, 9), et dans lequel les deux autres bornes desdits condensateurs filtres (6bis, 7bis) de sortie sont respectivement connectées auxdites bornes (8, 9).

2. Convertisseur d'amplification selon la revendication 1, caractérisé en ce que la borne de sortie (22) dudit transformateur à inductances est connectée à un interrupteur d'alimentation (12) qui, alternativement, connecte et déconnecte ladite borne à et de la terre (23).

Vin 21 1 22 30 Vout

2 3

7 6

9 7 bis 6 bis 8

12

23 Fig.1

Fig.2

$$A+B=A'+B'$$

Fig.3

6